# EUROPEAN PATENT APPLICATION

(11) **EP 2 314 249 A1**
(43) Date of publication of application: **27.04.2011**
(21) Application number: 10013469.1
(22) Date of filing: 08.10.2010
(51) Int. Cl.: A61C 1/08

(54) **Dental template**

(30) Priority: 21.10.2009 JP 2009242598
(71) Applicant: GC Corporation, Itabashi-ku Tokyo 174-8585 (JP)
(72) Inventor: Fujii, Naoto, Tokyo 174-8585 (JP)
(74) Representative: Müller-Boré & Partner Patentanwälte

(57) **Abstract**

To provide a dental template capable of safely, easily forming an embedding hole for a dental implant fixture at a jawbone and being removed easily after drilling of the embedding hole, the dental template is a hard dental template mounted along an alveolar ridge including at least a lost tooth part and provided with a guide hole 1 at a portion corresponding to the lost tooth part to guide a drill bit for drilling a hole for embedding of an implant fixture at the jawbone, in which a through hole 2 for extruding an excess impression material toward the oral cavity inner side is formed at a predetermined portion on the occlusal surface side other than a portion at which the guide hole (1) is formed.

## Description

The present invention relates to a dental template mounted along an alveolar ridge including at least a lost tooth part, and provided with a guide hole at a portion corresponding to the lost tooth part to guide a drill bit which drills a hole for embedding of an implant fixture at a jawbone.

As a treatment for recovering a lost oral cavity function of a lost tooth part, a dental implant treatment has been well used. In the dental implant treatment, a dental prosthesis is fixed on the oral cavity inner side of a dental implant fixture, which is embedded in a jawbone at the lost tooth part and comes to be an artificial tooth root bone-bonding with the jawbone.

In the dental implant treatment, the gingiva is incised or cut to expose the jawbone, and the jawbone is cut by a drill to form an embedding hole. Then, the dental implant fixture is embedded in the embedding hole.

In this case, there is a problem that it is very difficult to cut the jawbone while pressing the drill to an accurate position of the jawbone and in an accurate direction in a state that the gingiva is incised or cut.

For solving such a problem, Japanese Patent Application Laid-Open No. 2005-518834 discloses, in amended claim 1, a dental template having a bore-tube provided with a guide cylinder. The guide cylinder has a predetermined inclination at a predetermined position and predetermined standard sizes according to kinds of the dental implant fixtures.

The dental template is produced based on an impression, CT scan data of a jawbone, or the like, taken for every patient. The dental template is formed in a mouthpiece shape, and has the bore-tube having the guide cylinder formed at a the position and an inclination according to which the dental implant fixture will be embedded. Thus, the embedding hole for a dental implant fixture can be formed at an accurate position and toward an accurate direction only by mounting the dental template along an alveolar ridge including a lost tooth part, inserting a drill bit into the guide cylinder, and cutting the jawbone.

However, in such a dental template, since the portions other than the bore-tube provided with the guide cylinder needs to be formed with a hard acrylic resin or the like so as to accurately insert the drill bit, the dental template cannot be easily deformed by human power. Thus, a fixing method such as expanding the dental template and holding the dental template on remaining teeth or the like cannot be used. Therefore, when such the dental template is used, it is necessary to fix the dental template by a hand, insert the drill bit into the dental template, and cut the jawbone. Thus, there is a problem that the treatment is very dangerous and complicated.

For solving such a problem of difficulty in fixing the dental template, a method for coating an adhesive on a rear surface of the dental template and bonding/fixing a rear surface at the occlusal surface side of the dental template to occlusal surfaces of the remaining teeth has been considered. However, in this method, since the rear surface at the occlusal surface side of the dental template strongly bonds to the occlusal surfaces of the remaining teeth, there is a problem that it is difficult to remove the dental template after drilling of an embedding hole for a dental implant fixture at the jawbone.

The present invention is directed to a dental template capable of easily, safely forming an embedding hole for a dental implant fixture at a jawbone and being easily removed after drilling of the embedding hole.

The present inventors carried out earnest works to solve the aforementioned problems, and as a result, they found out the followings to complete the present invention. When a rear surface at the occlusal surface side of the dental template and an occlusal surface of remaining teeth are held through not an adhesive but an impression material, the dental template can be easily removed after drilling of an embedding hole. Further, because of having high viscosity, the impression material can harden while protruding on the lingual side and buccal side, so that skirt parts extending from an end part of the dental template can be formed, and the dental template can be thus strongly held on tooth surfaces by the skirt parts. Further, the dental template is essentially formed so as to accurately reproduce a shape in an oral cavity of a patient. Thus, if the impression material is coated even slightly thick, the dental template is hardtobeaccuratelymounted. Particularly, when the impression material is coated thick on the rear surface at the occlusal surface side, the excess impression material, which does not flow out to the skirt parts at the lingual side and buccal side and has no escaping place, greatly lifts the dental template from the occlusal surface, so that it becomes difficult to accurately form an embedding hole for a dental implant fixture. In order to prevent such a phenomenon from generating, a through hole for extruding the excess impression material to the oral cavity inner side is formed at a predetermined position on the occlusal surface side of the dental template other than a portion at which a guide hole for guiding a drill bit is formed. Thereby, even when the impression material is thickly coated between occlusal surface sides of remaining teeth and the rear surface of the dental template, the excess impression material can be easily extruded from the through hole toward the oral cavity inner side of the dental template, so that the dental template is not greatly lifted from the occlusal surface when the dental template is mounted in the oral cavity. Furthermore, when the impression material extruded from the through hole expands and hardens on the oral cavity inner side of the dental template, the impression material and the dental template can be bonded strongly together, so that the dental template can be accurately held in the oral cavity. Therefore, the embedding hole for a dental implant fixture can be safely, easily formed at a jawbone. Furthermore, since the impression material has elasticity, the dental template can be removed easily after drilling of the embedding hole.

According to an aspect of the present invention, a hard dental template is mounted along an alveolar ridge including at least a lost tooth part and has a guide hole at a portion corresponding to the lost tooth part to guide a drill bit for drilling a hole for embedding of an implant fixture at a jawbone, and a through hole for extruding an excess impression material toward the oral cavity inner side is formed at a predetermined position on the occlusal surface side other than the portion at which the guide hole is formed.

According to another aspect of the present invention, the through hole for extruding the excess impression material toward the oral cavity inner side is also formed on the lingual side and/or the labial side other than the portion at which the guide hole is formed. Thereby, since the impression material extruded from the through hole expands and hardens on the oral cavity inner side at the lingual side and/or labial side of the dental template, remaining teeth and the dental template can be bonded strongly together, so that it is preferable.

The dental template according to the present invention is a hard dental template being mounted along an alveolar ridge including at least a lost tooth part and having a guide hole at a portion corresponding to the lost tooth part to guide a drill bit for drilling a hole for embedding of an implant fixture at a jawbone. A rear surface at the occlusal surface side of this dental template is held to an occlusal surfaces of remaining teeth through an impression material. Thus, because of the impression material having elasticity, the dental template can be easily removed after drilling of the embedding hole. Further, because of having high viscosity, the impression material can harden while protruding on the lingual side and buccal side, so that skirt parts extending from an end part of the dental template can be formed. Thus, the dental template can be strongly held on tooth surfaces by the skirt parts. Further, the dental template is essentially formed so as to accurately reproduce a shape in an oral cavity of a patient. Thus, when the impression material is coated even slightly thick, the dental template is hard to be accurately mounted. Particularly, when the impression material is somewhat thickly coated on the rear surface at the occlusal surface side, the excess impression material, which does not flow to the skirt parts at the lingual side and buccal side and has no escaping place, greatly lifts the dental template from the occlusal surface, so that it is made difficult to accurately form an embedding hole for a dental implant fixture. In order to prevent such a phenomenon, a through hole for extruding the excess impression material to the oral cavity inner side is formed at a predetermined position on the occlusal surface side other than a portion at which a guide hole for guiding a drill bit is formed. Thereby, even when the impression material is thickly coated between the occlusal surface sides of a remaining teeth and the rear surface of the dental template, the excess impression material can be easily extruded from the through hole toward the oral cavity inner side of the dental template, so that the dental template is not greatly lifted from the occlusal surface when the dental template is mounted in the oral cavity. Furthermore, when the impression material extruded from the through hole expands and hardens on the oral cavity inner side of the dental template, the impression material and the dental template can be bonded strongly together, and the dental template can be accurately held in the oral cavity. Therefore, the embedding hole for a dental implant fixture can be safely, easily formed at a jawbone.

Furthermore, in the dental template of another exemplary embodiment, the through hole for extruding the excess impression material toward the oral cavity inner side is also formed on the lingual side and/or the labial side other than the portion at which the guide hole is formed. Therefore, since the impression material extruded from the through hole expands and hardens on the oral cavity inner side at the lingual side and/or labial side of the dental template, remaining teeth and the dental template can be bonded strongly together, so that it is preferable.
Fig. 1 is a perspective view illustrating one example of a dental template according to the present invention.
Fig. 2 is a perspective view illustrating a state that the dental template in Fig. 1 is mounted in an oral cavity.
Fig.3 is a perspective view illustrating a state that an excess impression material is extruded from a through hole.
Fig. 4 is a perspective view illustrating another example of a dental template according to the present invention.

The dental template according to the present invention will be described in derail below with reference to the drawings.

In the drawings, an impression material X is used for firmly holding the dental template according to the present invention on remaining tooth surfaces. As the impression material X, a silicone impression material or the like can be used.

A guide hole 1 is for guiding a drill bit for drilling a hole for embedding of an implant fixture at a jawbone. The guide hole 1 is formed at a portion corresponding to a lost tooth part of the dental template according to the present invention. Since the drill bit is inserted into the guide hole 1, a portion at the guide hole 1 is preferably made of a metal. The guide hole 1 can be formed by bonding such the material portion produced apart from the dental template and to the dental template, or can be formed by drilling the dental template made of a metal.

A through hole 2 is formed at a predetermined position on the occlusal surface side other than a portion at which the guide hole 1 is formed, and is for extruding the excess impression material X toward the oral cavity inner side. If the through hole 2 is also formed at predetermined positions on the lingual side and/or the labial side other than the portion at which the guide hole 1 is formed, the impression material X extruded from the through hole 2 expands and hardens on the oral cavity inner side at the lingual side and/or the labial side of the dental template, so that the impression material X and the dental template can be bonded together more strongly.

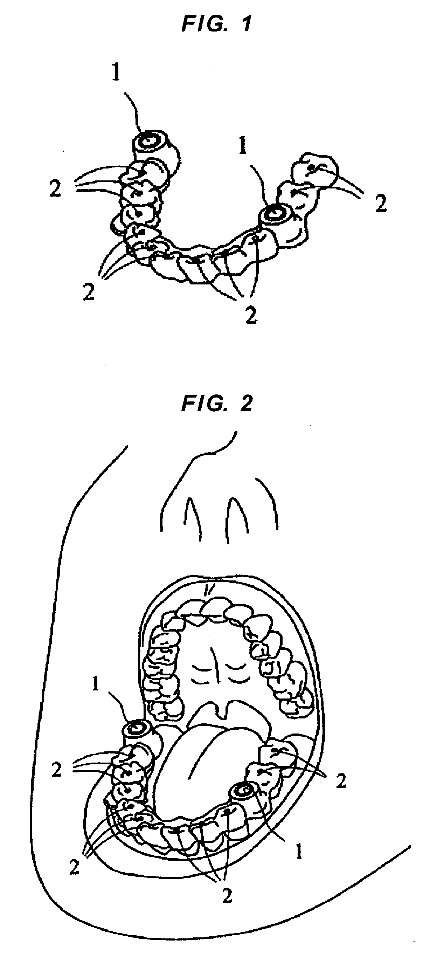

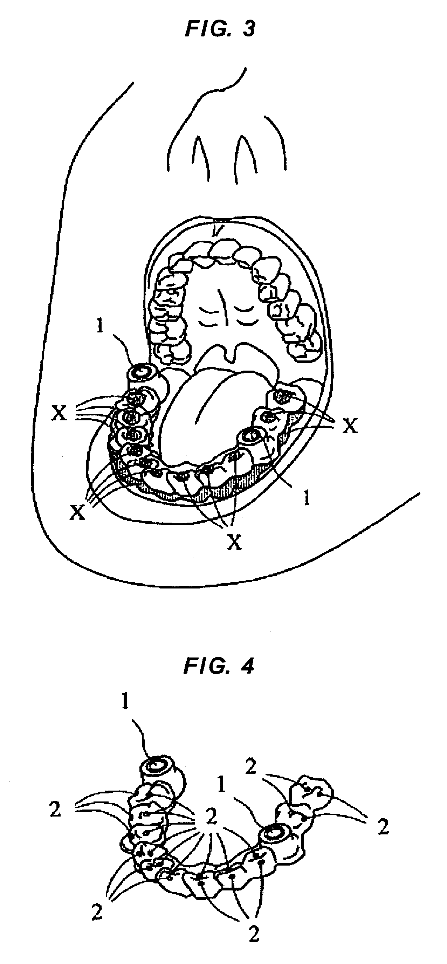

For actually using the dental template according to the present invention, an impression in an oral cavity of a patient is taken, and then the dental template is produced based on the shape of the impression. As for the dental template, a portion at a lost tooth part is formed to cover the surface of a gingiva, and a portion other than the lost tooth part is formed to cover the occlusal surface sides of remaining teeth. For example, as illustrated in Figs. 1 to 4, the guide hole 1 can be formed in the dental template by embedding a metal cylinder in the portion, which corresponds to the lost tooth part and is formed so as to cover the surface of the gingiva. When the metal dental template is produced, the guide hole 1 for inserting a drill bit can be directly made at the portion corresponding to the lost tooth part.

The through hole 2 for extruding the excess impression material X toward the oral cavity inner side is properly formed at the predetermined position of the dental template on the occlusal surface side other than the portion at which the guide hole 1 is formed. For example, as illustrated in Figs. 1 to 3, one through hole 2 is formed on the occlusal surface side for every tooth in the portion other than the lost tooth part, so that the excess impression X can be accurately extruded toward the oral cavity inner side for every remaining tooth. Further, when the impression material X has high viscosity, a plurality of the through hole 2 is formed or a comparatively large through hole 2 is formed for every remaining tooth, so that the excess impression material X can be easily extruded toward the oral cavity inner side.

Furthermore, a hollow or dimples may be formed around the hole 2 in the teeth side.

Furthermore, in the dental template according to the present invention, the impression material X having thixotropy viscosity is used. Thus, the impression material X extruded to protrude from the lingual side and/or the labial side hardens forming skirt parts extended from an end part of the dental template, so that the impression material X can be accurately held to the surfaces of the remaining teeth by the skirts. Thus, the through hole 2 does not need to be necessarily formed on the lingual side and/or the labial side. However, when the through hole 2 is formed on the lingual side and/or the labial side, the impression material extruded from the through hole 2 expands and hardens on the oral cavity inner side at the lingual side and/or the labial side of the dental template, so that the impression material and the dental template can be bonded together more strongly. Thus, it is preferable.

## Claims

1. A hard dental template which is mounted along an alveolar ridge including at least a lost tooth part and has a guide hole (1) at a portion corresponding to the lost tooth part to guide a drill bit for drilling a hole for embedding of an implant fixture at a jawbone, wherein a through hole (2) for extruding an excess impression material (X) toward the oral cavity inner side is formed at a predetermined position on the occlusal surface side other than a portion at which the guide hole (1) is formed.

2. The dental template as claimed in claim 1, wherein the through hole (2) for extruding the excess impression material (X) toward the oral cavity inner side is formed on the lingual side and/or the labial side other than the portion at which the guide hole (1) is formed.
